Europäisches Patentamt

European Patent Office

Office européen des brevets

(11) Publication number: **0 341 313 B1**

## EUROPEAN PATENT SPECIFICATION

(45) Date of publication of patent specification: **23.06.93**  (51) Int. Cl.⁵: **C03C 3/091**

(21) Application number: **88908385.3**

(22) Date of filing: **30.09.88**

(86) International application number:
**PCT/JP88/00999**

(87) International publication number:
**WO 89/02877 (06.04.89 89/08)**

(54) **ALKALI FREE GLASS.**

(30) Priority: **01.10.87 JP 245863/87**

(43) Date of publication of application:
**15.11.89 Bulletin 89/46**

(45) Publication of the grant of the patent:
**23.06.93 Bulletin 93/25**

(84) Designated Contracting States:
**DE GB NL**

(56) References cited:
**EP-A- 0 109 228**
**GB-A- 749 924**
**US-A- 4 396 720**

(73) Proprietor: **ASAHI GLASS COMPANY LTD.**
**1-2, Marunouchi 2-chome**
**Chiyoda-ku Tokyo 100(JP)**

(72) Inventor: **NAKAO, Yasumasa**
**3-8-8, Chidori**
**Ota-ku Tokyo 146(JP)**
Inventor: **AIZAWA, Haruo**
**1-77, Nishi-Hemimachi**
**Yokosuka-shi Kanagawa-ken 238(JP)**
Inventor: **TANAKA, Chikao**
**1205-61, Kosugaya-cho Totsuka-ku**
**Yokohama-shi Kanagawa-ken 247(JP)**

(74) Representative: **Wächtershäuser, Günter, Dr.**
**Tal 29**
**W-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 341 313 B1

## Description

The present invention relates to an alkali free glass which is substantially free from alkali metal oxide and zinc oxide and which is useful as glass substrates for various displays or photo masks.

Heretofore, glass substrates for various displays, particularly those having a thin metal film formed on their surface, are required to have high levels of the following properties.

a) Since they are exposed to high temperatures during the step for the formation of the thin film, they are required to have a high strain point.

b) if they contain an alkali metal oxide, the alkali metal ions are likely to diffuse into the thin film, whereby the film properties are likely to deteriorate. Therefore, they are required to be substantially free from alkali metal ions.

c) They are required to be free from internal and surfacial defects (bubbles, striae, inclusions, pits, scratch marks, etc.).

d) They are required to have excellent chemical durability so as to be durable during the washing step.

However, in recent years, displays of TFT (thin film transistor) type are increasing wherein a semiconductor transistor or the like is formed on a glass substrate. The display substrates to be employed for the displays of this type are frequently exposed to an etchant containing hydrofluoric acid for etching an insulating film of $SiO_2$ or $Si_3N_4$.

Inherently, glass is very weak against hydrofluoric acid. Therefore, when exposed to such an etchant, the conventional alkali free glass became useless in many cases with its surface eroded to have turbidity.

Quartz glass or #7059 glass of Corning Glass Works may be mentioned as glass which is durable against such an etchant. However, quartz glass has a very high viscosity, and it is difficult to melt it, whereby the production cost tends to be high. On the other hand, #7059 glass has a problem that the strain point is low.

Japanese Unexamined Patent Publication No. 281041/1986 discloses an alkali free glass consisting essentially of from 50 to 60% by weight of $SiO_2$, from 10 to 20% by weight of $Al_2O_3$, from 0.1 to 4% by weight of $B_2O_3$, from 6 to 14% by weight of ZnO, from 3 to 10% by weight of CaO, from 3 to 10% by weight of MgO, from 3 to 10% by weight of BaO, from 0 to 4% by weight of $ZrO_2$, from 0 to 5% by weight of SrO, from 3 to 10% by weight of CaO + SrO and from 3 to 10% by weight of BaO + SrO as a glass which solves the above-mentioned problems. When this glass is formed into a glass ribbon by a float method, zinc oxide on the glass surface on the molten metal bath is reduced by a reducing atmosphere and evaporates. As a result, the surface portion and the underlayer portion of the glass ribbon tend to have different compositions to each other, whereby there will be a difference in the shrinkage when cooled. The difference in shrinkage brings about a deflection or distortion of the glass ribbon. Thus, such glass has a problem that a float method having excellent productivity can hardly be applied thereto.

It is an object of the present invention to solve the above drawbacks and to provide an alkali free glass which undergoes no turbidity by hydrofluoric acid, which is excellent also in other chemical durability, which is readily melted, which has a high strain point, which has a low expansion coefficient and which is capable of being formed by a float method.

The present invention provides an alkali free glass consisting essentially of from 55 to 70 mol% of $SiO_2$, from 5 to 15 mol% of $Al_2O_3$, from 10 to 25 mol% of $B_2O_3$, from 72 to 80 mol% of $SiO_2$ + $B_2O_3$, from 1 to 6 mol% of MgO, from 0 to 6 mol% of CaO, from 3 to 12 mol% of SrO and from 3 to 12 mol% of BaO and essentially free from alkali metal oxide and zinc oxide.

Now, the present invention will be described in detail with reference to the preferred embodiments.

Firstly, the reasons for limiting the compositional ranges of the respective components will be described.

If $SiO_2$ is less than 55 mol%, the chemical resistance of the glass will be inadequate. On the other hand, if it exceeds 70 mol%, the meltability of the glass deteriorates, and the devitrification temperature increases, such being undesirable.

$Al_2O_3$ has a function to suppress the phase separation of the glass, to reduce the thermal expansion coefficient and to increase the strain point. This effect is small when $Al_2O_3$ is less than 5 mol%. If $Al_2O_3$ exceeds 15 mol%, the meltability of the glass tends to be poor, such being undesirable.

$B_2O_3$ is effective for preventing the formation of turbidity due to hydrofluoric acid and to reduce the expansion coefficient and to improve the meltability. If $B_2O_3$ is less than 10 mol%, no adequate effect will be obtained, and if it exceeds 25 mol%, the strain point tends to be low, and the compositional change due to evaporation during the melting operation is likely to be brought about, such being undesirable.

The present inventors have found that the turbidity caused by hydrofluoric acid is mainly due to the amount of $SiO_2$ + $B_2O_3$. The amount of $SiO_2$ + $B_2O_3$ is preferably at least 72 mol%. If the amount of $SiO_2$

+ $B_2O_3$ exceeds 80 mol%, the solubility tends to be poor, such being undesirable.

MgO is a component which is effective to reduce the thermal expansion coefficient and to improve the solubility of the glass. MgO has a particularly remarkable effect for the improvement of meltability and yet has a feature that it does not lower the strain point. Therefore, it is used in an amount of at least 1 mol%. On the other hand, if MgO exceeds 6 mol%, the turbidity due to hydrofluoric acid and the phase separation of the glass are likely to be led, such being undesirable.

CaO has substantially the same function as MgO. If it exceeds 6 mol%, turbidity due to hydrofluoric acid and the phase separation of the glass are likely to be led, such being undesirable.

SrO is a component which suppresses the phase separation of the glass and which is relatively useful for the prevention of the turbidity due to hydrofluoric acid. If SrO is less than 3 mol%, no adequate effect will be obtained. On the other hand, if it exceeds 12 mol%, the thermal expansion coefficient increases, and the chemical durability such as the water resistance, tends to deteriorate, such being undesirable.

BaO has a function similar to SrO. If it is less than 3 mol%, no adequate effect will be obtained. If it exceeds 12 mol%, the thermal expansion coefficient increases, and the chemical resistance such as the water resistance tends to deteriorate, such being undesirable.

The glass of the present invention may contain not more than 5 mol% in total of $ZrO_2$, $P_2O_5$, $TiO_2$, $SO_3$, $As_2O_3$, $Sb_2O_3$, F and Cl in order to improve the meltability, clearness and formability of the glass in addition to the above-mentioned components.

ZnO makes the forming by a float method difficult, and therefore is not substantially contained.

The alkali free glass of the present invention preferably consists essentially of from 59 to 70 mol% of $SiO_2$, from 5 to 15 mol% of $Al_2O_3$, from 10 to 20 mol% of $B_2O_3$, from 72 to 80 mol% of $SiO_2$ + $B_2O_3$, from 1 to 5 mol% of MgO, from 2 to 5 mol% of CaO, from 3 to 10 mol% of SrO and from 4 to 10 mol% of BaO.

The glass of the present invention is prepared, for example, by the following process.

The respective starting materials commonly used are mixed in the desired proportions, and the mixture is continuously introduced into a melting furnace and melted under heating at a temperature of from 1,500 to 1,600°C. This molten glass is formed into a sheet having a predetermined thickness by a float method, followed by cooling and cutting.

Now, the present invention will be described in further detail with reference to Examples. However, it should be understood that the present invention is by no means restricted to such specific Examples.

EXAMPLES

The examples of the present invention are shown in Tables 1 and 2 (Sample Nos. 1 to 6).

The starting materials of the respective components were mixed to have the desired proportions, and the mixture was heated in a platinum crucible at a temperature of from 1,450 to 1,500°C for from 3 to 4 hours for melting. For the melting, a platinum stirrer was used and the stirring was continued for from 1 to 2 hours for homogenizing the glass. Then, the molten glass was casted into a sheet form, followed by gradual cooling.

In Table 1, the glass composition is shown, and in Table 2, the thermal expansion coefficient, the high temperature viscosity, the devitrification temperature, the strain point, the water resistance, the acid resistance and the hydrofluoric acid resistance of the glass are shown.

Table 1

| Sample No. | 1 | 2 | 3 | 4 | 5 | 6 | 7 | 8 |
|---|---|---|---|---|---|---|---|---|
| $SiO_2$ (mol %) | 57 | 60 | 62 | 61 | 62 | 62 | 61 | 64 |
| $Al_2O_3$ | 6 | 12 | 9 | 7 | 12 | 10 | 10 | 8 |
| $B_2O_3$ | 22 | 15 | 12 | 12 | 14 | 16 | 2 | 17 |
| MgO | 2 | 2 | 3 | 1 | 2 | 2 | 11 | – |
| CaO | 2 | 2 | – | 5 | 2 | 2 | 7 | – |
| SrO | 5 | 4 | 4 | 10 | 4 | 4 | – | – |
| BaO | 6 | 5 | 10 | 4 | 4 | 4 | 2 | 11 |
| ZnO | – | – | – | – | – | – | 7 | |

Table 2

| Sample No. | 1 | 2 | 3 | 4 | 5 | 6 | 7 | 8 | Notes |
|---|---|---|---|---|---|---|---|---|---|
| Thermal expansion coefficient ($\times 10^{-7}$/°C) | 42 | 40 | 48 | 50 | 40 | 39 | 44 | 46 | 50 – 350°C |
| High temperature viscosity ($\log \eta = 2.5$) | 1460 | 1480 | 1465 | 1460 | 1510 | 1480 | 1390 | 1479 | Index for melting temperature |
| ($\log \eta = 4.0$) | 1155 | 1150 | 1160 | 1160 | 1240 | 1220 | 1165 | 1174 | Index for forming temperature |
| Devitrification temperature (°C) | 990 | 1040 | 980 | 1040 | 1100 | 1070 | 1165 | 970 | |
| Strain point (°C) | 624 | 670 | 625 | 630 | 660 | 653 | 670 | 580 | |
| Water resistance ($mg/cm^2$) | 0.10 | 0.10 | 0.09 | 0.10 | 0.08 | 0.09 | 0.04 | 0.10 | 95°C x 40h Water |
| Acid resistance ($mg/cm^2$) | 0.80 | 0.60 | 0.85 | 0.40 | 0.35 | 0.25 | 0.05 | 1.92 | 95°C x 20h N/100 $HNO_3$ |
| Hydrofluoric acid resistance | O | O | O | O | O | O | X | O | RT x 20 min $NH_4F$ : HF = 6 : 1 |

The water resistance was determined in such a manner that the glass was immersed in deionized water at 95°C for 40 hours, whereupon the weight reduction was measured, and the water resistance was represented by the weight reduction per unit surface area of the glass.

The acid resistance was determined in such a manner that the glass was immersed in 1/100 N$HNO_3$ 95°C for 20 hours, whereupon the weight reduction was measured, and the acid resistance was represented by the height reduction per unit surface area of the glass.

The hydrofluoric acid resistance was determined in such a manner that the glass was immersed in a NH$_4$F/HF solution (a solution obtained by mixing a 40 wt% ammonium fluoride aqueous solution and a 47 wt% hydrofluoric acid aqueous solution in a weight ratio of 6:1) at room temperature for 20 minutes, whereupon the outer appearance was visually evaluated under the following standards:

O : Good

X : Poor

As is evident from Table 2, the glass of the present invention in each of the Examples has a low thermal expansion coefficient at a level of from 40 to 50 x $10^{-7}/°C$ and a low temperature for $\log \eta$ = 2.5 (wherein $\eta$ is the viscosity of the glass represented by poise, the same applies hereinafter) which is an index for one meltability, thus indicating that it can be easily melted.

Further, the difference between the temperature for $\log \eta$ = 4 as an index for the forming and the devitrification temperature is sufficiently large, thus indicating that there will be no trouble of devitrification during the forming operation.

The strain point is as high as at least 600°C, thus indicating that it is adequately durable against heat treatment at a high temperature.

Also with respect to the chemical properties, each sample of the present invention has excellent water resistance and acid resistance and hardly forms turbidity by hydrofluoric acid.

On the other hand, Sample Nos. 7 and 8 represent Comparative Examples. Sample No. 7 is likely to have turbidity by hydrofluoric acid, although it has good meltability with a relatively low temperature for $\log \eta$ = 2.5 as an index of the melting temperature. Sample No. 8 has a low strain point and is susceptible to thermal deformation, although it is resistant against hydrofluoric acid.

The glass of the present invention contains no substantial zinc oxide and is formed by a float method having excellent productivity. Further, it is resistant against hydrofluoric acid so that turbidity is hardly formed by hydrofluoric acid. Further, it is excellent in the meltability, formability and heat resistance and has a low thermal expansion coefficient. Thus, it is suitable for use in the applications where such properties are required, for example, for display substrates, photo mask substrates or TFT type display substrates.

**Claims**

1. An alkali free glass consisting essentially of from 55 to 70 mol% of SiO$_2$, from 5 to 15 mol% of Al$_2$O$_3$, from 10 to 25 mol% of B$_2$O$_3$, from 72 to 80 mol% of SiO$_2$ + B$_2$O$_3$, from 1 to 6 mol% of MgO, from 0 to 6 mol% of CaO, from 3 to 12 mol% of SrO and from 3 to 12 mol% of BaO and essentially free from alkali metal oxide and zinc oxide.

2. The alkali free glass according to Claim 1, which consists essentially of from 59 to 70 mol% of SiO$_2$, from 5 to 15 mol% of Al$_2$O$_3$, from 10 to 20 mol% of B$_2$O$_3$, from 72 to 80 mol% of SiO$_2$ + B$_2$O$_3$, from 1 to 5 mol% of MgO, from 2 to 5 mol% of CaO, from 3 to 10 mol% of SrO and from 4 to 10 mol% of BaO.

**Patentansprüche**

1. Ein alkalifreies Glas, bestehend im wesentlichen aus von 55 bis 70 Mol-% SiO$_2$, von 5 bis 15 Mol-% Al$_2$O$_3$, von 10 bis 25 Mol-% B$_2$O$_3$, von 72 bis 80 Mol-% SiO$_2$ + B$_2$O$_3$, von 1 bis 6 Mol-% MgO, von 0 bis 6 Mol-% CaO, von 3 bis 12 Mol-% SrO und von 3 bis 12 Mol-% BaO und das im wesentlichen frei von Alkalimetalloxid und Zinkoxid ist.

2. Das alkalifreie Glas nach Anspruch 1, das im wesentlichen besteht aus von 59 bis 70 Mol-% SiO$_2$, von 5 bis 15 Mol-% Al$_2$O$_3$, von 10 bis 20 Mol-% B$_2$O$_3$, von 72 bis 80 Mol-% SiO$_2$ + B$_2$O$_3$, von 1 bis 5 Mol-% MgO, von 2 bis 5 Mol-% CaO, von 3 bis 10 Mol-% SrO und von 4 bis 10 Mol-% BaO.

**Revendications**

1. Verre exempt d'alcalis constitué essentiellement par :
- 55 à 70% en moles de SiO$_2$ ;
- 5 à 15% en moles d'Al$_2$O$_3$ ;
- 10 à 25% en moles de B$_2$O$_3$ ;
- 72 à 80% en moles de SiO$_2$ + B$_2$O$_3$ ;
- 1 à 6% en moles de MgO ;

- 0 à 6% en moles de CaO ;
- 3 à 12% en moles de SrO ; et
- 3 à 12% en moles de BaO,

et substantiellement exempt d'oxyde de métal alcalin et d'oxyde de zinc.

2. Verre exempt d'alcalis selon la revendication 1, qui est constitué essentiellement par :
    - 59 à 70% en moles de $SiO_2$ ;
    - 5 à 15% en moles d'$Al_2O_3$ ;
    - 10 à 20% en moles de $B_2O_3$ ;
    - 72 à 80% en moles de $SiO_2$ + $B_2O_3$ ;
    - 1 à 5% en moles de MgO ;
    - 2 à 5% en moles de CaO ;
    - 3 à 10% en modes de SrO ; et
    - 4 à 10% en moles de BaO.